Europäisches Patentamt

European Patent Office

Office européen des brevets

(19)

(11) **EP 0 796 033 A1**

(12) # DEMANDE DE BREVET EUROPEEN

(43) Date de publication:
17.09.1997 Bulletin 1997/38

(51) Int. Cl.⁶: **H04R 3/00**, H04M 1/72

(21) Numéro de dépôt: 97200666.2

(22) Date de dépôt: 06.03.1997

(84) Etats contractants désignés:
CH DE FR GB LI

(30) Priorité: 13.03.1996 FR 9603155

(71) Demandeur: Philips Electronics N.V.
5621 BA Eindhoven (NL)

(72) Inventeurs:
• Blanvillain, Xavier
75008 Paris (FR)
• Thauvin, Philippe
75008 Paris (FR)
• Pincon, Stéphane
75008 Paris (FR)
• Simon, Jean-Michel
75008 Paris (FR)

(74) Mandataire: Chaffraix, Jean
Société Civile S.P.I.D.
156, Boulevard Haussmann
75008 Paris (FR)

(54) **Téléphone équipé d'un transducteur électro-mécanique, procédé d'adaptation de la réponse en fréquence d'un tel transducteur et procédé de codage d'une mélodie**

(57) L'invention concerne notamment un téléphone doté d'un transducteur électro-mécanique, qui comporte des moyens d'adaptation de la réponse en fréquence dudit transducteur pour obtenir en sortie dudit transducteur un niveau sonore constant quelque soit la fréquence considérée.

Lesdits moyens d'adaptation consistent notamment à faire varier le rapport cyclique du signal d'excitation dudit transducteur.

Applications : équipements téléphoniques.

FIG.1

## Description

La présente invention concerne un équipement téléphonique doté d'un transducteur électro-mécanique contrôlable qui délivre un niveau sonore variable en fonction de la fréquence, ainsi qu'un procédé permettant de jouer des mélodies sur un tel équipement, et un procédé de codage de telles mélodies.

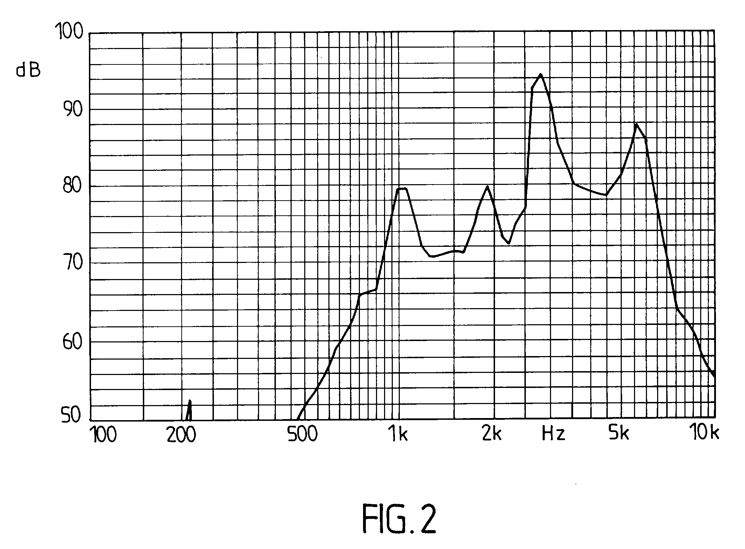

Les équipements téléphoniques et notamment les téléphones mobiles doivent émettre des sonneries qui puissent être entendues dans un environnement bruyant. De plus ces équipements sont soumis à des contraintes sévères en matière d'encombrement (poids, volume) et de tension d'alimentation. Pour respecter l'ensemble de ces contraintes on est amené à utiliser sur de tels équipements des transducteurs électro-mécaniques (ou vibreurs sonores) qui sont prévus pour générer des sonneries mono-ton (ou beep) d'un niveau sonore élevé. A titre d'exemple, la réponse fréquentielle d'un tel transducteur électro-mécanique est représentée sur la figure 2. Cette réponse fréquentielle est très irrégulière mais on obtient un niveau sonore de 95dB environ pour une fréquence de 2,730kHz.

Afin d'améliorer le confort d'utilisation des équipements téléphoniques, on cherche à proposer à l'utilisateur diverses mélodies musicales pour remplacer ces sonneries classiques. A cet effet, le brevet américain n°4,480,153 propose d'utiliser un équipement annexe qui se connecte au téléphone pour jouer diverses mélodies musicales.

Un premier but de la présente invention est de parvenir à jouer des mélodies composées d'une grande variété de notes avec les transducteurs électro-mécaniques décrits dans les paragraphes précédents qui équipent couramment les équipements téléphoniques.

Pour cela, un équipement téléphonique selon l'invention et tel que défini dans le paragraphe introductif est caractérisé en ce qu'il comporte des moyens d'adaptation de la réponse en fréquence dudit transducteur pour obtenir un niveau sonore constant quelque soit la fréquence considérée.

L'invention est notamment applicable dans le domaine des téléphones mobiles.

Dans un mode de réalisation particulièrement avantageux lesdits moyens d'adaptation consistent notamment à faire varier le rapport cyclique du signal d' excitation dudit transducteur électro-mécanique.

Et l'équipement téléphonique comporte alors avantageusement des moyens de mémorisation pour stocker pour chaque fréquence au moins une valeur du rapport cyclique dudit signal d'excitation pour obtenir au moins un niveau sonore donné en sortie du transducteur.

Un autre but de la présente invention est de proposer une méthode efficace pour le codage d'une telle mélodie.

Pour cela, un équipement téléphonique tel que défini dans les paragraphes précédents est caractérisé en ce qu'il comporte:

- des moyens de codage d'une mélodie, consistant à stocker dans une table un ou plusieurs éléments constitutifs de ladite mélodie: notes, silences et éventuellement répétitions,
- des moyens de lecture d'une mélodie codée, consistant à parcourir séquentiellement ladite table à partir du début de ladite mélodie, et éventuellement à effectuer des retours en arrière pour jouer lesdites répétitions.

Un tel procédé de codage de mélodie peut être mis en oeuvre indépendamment du procédé précédemment décrit pour jouer des mélodies avec les transducteurs électro-mécaniques qui équipent couramment les téléphones du commerce.

Dans un mode de réalisation avantageux, ladite table contient pour chaque répétition:

- un nombre de répétitions,
- une indication relative aux éléments à répéter,
- éventuellement une limite dans le temps lorsque ledit nombre de répétition est infini.

L'invention sera mieux comprise et d'autres détails apparaîtront dans la description qui va suivre en regard des dessins annexés qui sont donnés à titre d'exemple non limitatif et dans lesquels:

- la figure 1 représente un exemple d'équipement téléphonique selon l'invention,
- la figure 2 donne un exemple de réponse fréquentielle pour les transducteurs électro-mécaniques tels que décrits précédemment,
- la figure 3 représente l'effet de la variation du rapport cyclique du signal d'excitation sur le niveau sonore délivré par le transducteur,
- la figure 4 représente un exemple de mélodie,
- la figure 5 donne un exemple d'organigramme de fonctionnement d'un procédé permettant de jouer des mélodies, conformément à l'invention.

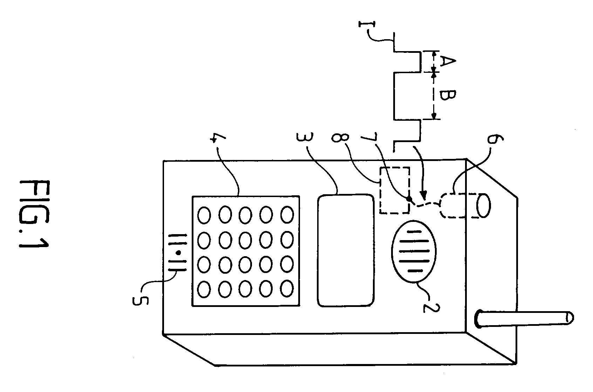

Sur la figure 1, on a représenté un équipement téléphonique selon l'invention. Un tel équipement comporte notamment une antenne 1, un haut-parleur/écouteur 2, un écran 3, un clavier 4 un microphone 5, un transducteur électro-mécanique 6 qui est relié à une sortie 7 d'un ensemble à microprocesseur 8.

Dans l'exemple de réalisation qui va maintenant être décrit, l'ensemble à microprocesseur 8 est un microprocesseur 91CL301 fabriqué par PHILIPS (constitué à partir d'un 68000 de Motorola). Et le transducteur électro-mécanique est un transducteur SBT 0905 RP fabriqué par SAMBU.

Le transducteur électro-mécanique 6 est composé d'une bobine montée autour d'un entrefer. Une membrane métallique est située au dessus de l'électro-aimant ainsi constitué. Un signal d'excitation I (courant) appliqué au transducteur fait varier le champ magnétique à proximité de la membrane provoquant ainsi son oscillation à la fréquence dudit signal. L'utilisation de signaux d'excitation en créneaux permet d'obtenir une variation maximale du champ magnétique. Sur la figure 1, on a représenté le signal d'excitation I. Son rapport cyclique R est égal à A/A+B où A est la durée du front haut et B celle du front bas. La génération de ces signaux en créneaux est assurée par l'ensemble à microprocesseur 8.

Sur la figure 2 on a représenté le niveau sonore de sortie du transducteur (exprimé en décibels) en fonction de la fréquence du signal d'excitation du transducteur, en champ libre (c'est-à-dire hors coque) dans des conditions normales de fonctionnement (notamment lorsque le rapport cyclique du signal d'excitation est de 50%). Pour des fréquences comprises entre 500Hz et 10kHz, le niveau sonore de sortie varie de 50dB à 95dB. De tels transducteurs ne permettent donc pas de jouer des mélodies composées d'une pluralité de notes de fréquences différentes.

L'invention consiste à adapter la réponse du transducteur en fonction de la fréquence que l'on cherche à jouer pour obtenir un niveau sonore constant.

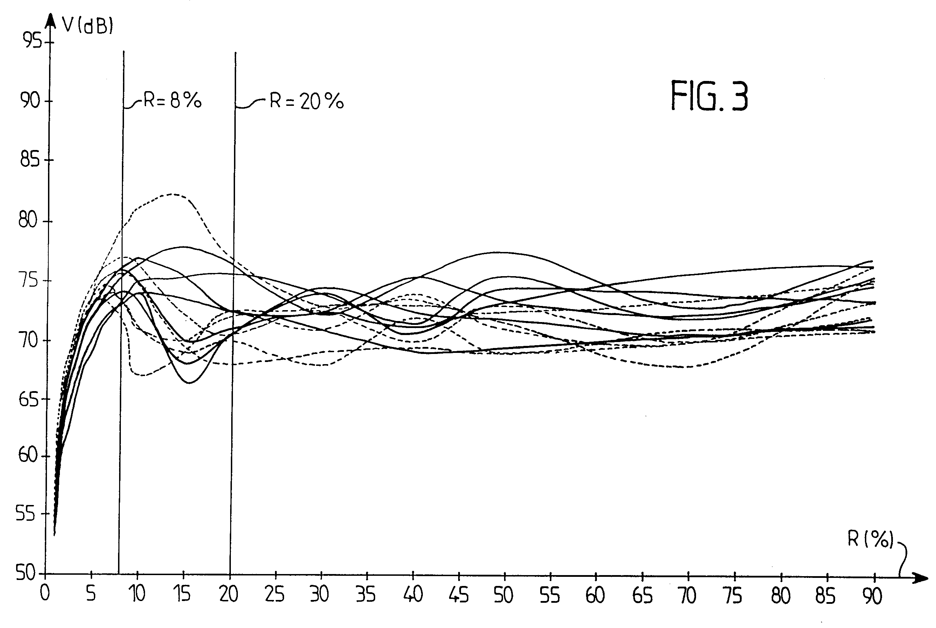

L'invention est notamment basée sur l'observation suivante: lorsque le rapport cyclique du signal d'excitation I varie entre 1% et 8%, le niveau sonore obtenu en sortie du transducteur varie proportionnellement avec le rapport cyclique, quelque soit la fréquence considérée. Sur la figure 3 on a représenté l'effet de la variation du rapport cyclique du signal d'excitation I sur le niveau sonore délivré par le transducteur. On remarque que trois zones se dégagent:

- dans une première zone (R compris entre 1% et 8%), dans laquelle quelque soit la fréquence, le rapport cyclique et le niveau sonore sont proportionnels,
- une seconde zone (R compris entre 8% et 20%) qui est trop chaotique pour être exploitable,
- une troisième zone (R supérieur à 20%) dans laquelle la variation du rapport cyclique n'a plus d'incidence.

L'invention consiste donc à associer à chaque fréquence une valeur du rapport cyclique du signal d'excitation du transducteur comprise entre 1% et 8% pour obtenir un niveau sonore donné.

La génération de signaux d'excitation, de fréquence et de rapport cyclique variables, est assurée par l'ensemble à microprocesseur 8. Les fréquences qui peuvent être générées dépendent de l'horloge ($F_{CLK}$) qui pilote le microprocesseur: on ne peut donc obtenir qu'un certain nombre de valeurs discrètes, et non une variation continue de la fréquence. Parmi les fréquences disponibles, on a sélectionné une gamme permettant de jouer des morceaux de musique. Le niveau de cette gamme a été choisi pour obtenir un confort d'écoute satisfaisant, et à l'intérieur de cette gamme on a retenu les fréquences qui étaient suffisamment proches des notes de musiques.

Le microprocesseur PHILIPS 91CL301 permet de générer les fréquences $F_i$ suivantes:

$$F_i = F_{CLK}/255/(1+x) \text{ avec } F_{CLK} = 19.5\text{MHz et } x = 0, ..., 255$$

On a choisi d'utiliser la gamme [444Hz → 1062Hz], les gammes supérieures n'étant pas bien adaptées d'un point de vue psycho-acoustique (elles sont énervantes pour l'utilisateur). Et dans cette gamme, on a retenu les fréquences suivantes :

| x | fréquence | note(fréquence musicale) | référence |
|---|---|---|---|
| 143 | 531 Hz | do (523 Hz) | → 4 |
| 131 | 579 Hz | do# (554 Hz) | → 5 |
| 127 | 597 Hz | re (587 Hz) | → 6 |
| 119 | 637 Hz | mi (659 Hz) | → 7 |
| 107 | 708 Hz | fa (698,5 Hz) | → 8 |
| 103 | 735 Hz | fa# (740 Hz) | → 9 |
| 95 | 796 Hz | sol (784 Hz) | → A |
| 83 | 910 Hz | la (880 Hz) | → B |
| 75 | 1006 Hz | si (988 Hz) | → C |
| 71 | 1062 Hz | do (1046,5 Hz) | → D |

Dans la suite de la description, chaque note est référencée par un digit en hexadécimales (4 à D par ordre de fréquences croissantes, dans l'exemple décrit). Une table T1 donne, pour chaque note, la correspondance référence/fréquence.

On va maintenant donner la table T2 de correspondance entre, d'une part les notes et les niveaux sonores V1, V2 ou V3 recherchés, et d'autre part le rapport cyclique à utiliser.

TABLE T2

| | V1 (67±0,5dB) | V2 (70±0,5dB) | V3(73±0,5dB) |
|---|---|---|---|
| 4 (do) | 2,5% | 3,66% | 8% |
| 5 (do#) | 3% | 3,66% | 5,33% |
| 6 (re) | 2% | 3% | 4,5% |
| 7 (mi) | 2,5% | 3,66% | 5% |
| 8 (fa) | 3% | 4% | 6% |
| 9 (fa#) | 3% | 3,66% | 5% |
| A (sol) | 2% | 3,66% | 5,33% |
| B (la) | 3,66% | 5% | 8% |
| C (si) | 2,5% | 3,33% | 5,33% |
| D (do) | 4% | 5,33% | 8% |

Pour optimiser l'espace mémoire nécessaire pour le codage, les mélodies sont stockées dans une troisième table T3. Pour chaque mélodie cette table indique séquentiellement les éléments constitutifs de ladite mélodie:

- les notes à jouer (N) et leur durée (D),
- les silences (S) et leur durée (D),
- les répétitions (R), le nombre de répétitions NbR, et le nombre de lignes à répéter NbL.

Dans un autre exemple de réalisation de la présente invention, certains de ces éléments au moins sont définis à l'intérieur d'une fenêtre W d'une durée déterminée. Lorsqu'une telle fenêtre a été définie, une temporisation correspondant à ladite durée est lancée avant de jouer les éléments compris dans cette fenêtre. Et le contenu de la fenêtre est joué tant que cette temporisation n'est pas arrivée à échéance.

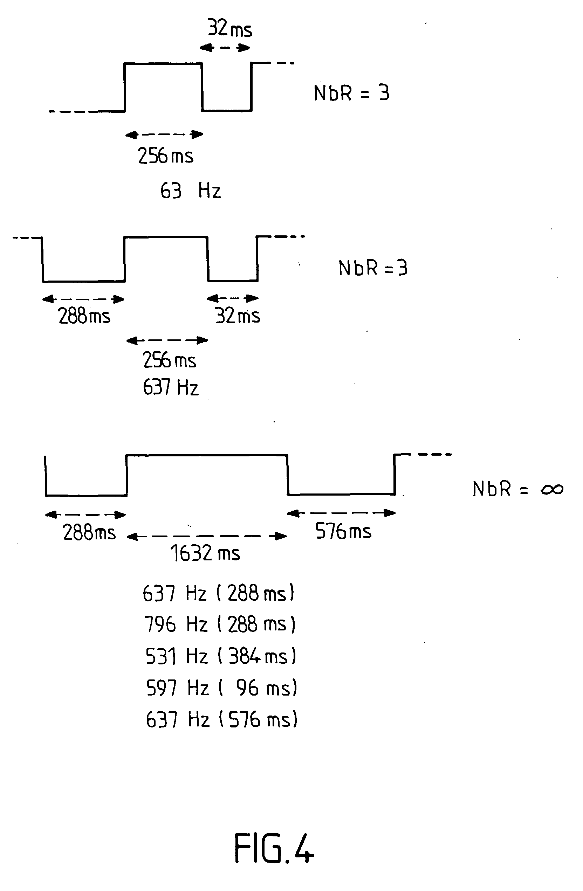

A titre d'exemple, on va maintenant donner le contenu de la table T3 pour la mélodie M décrite sur la figure 4.

La mélodie M représentée sur la figure 4 consiste à répéter infiniment les étapes suivantes:

- répéter trois fois: la note mi (256ms) suivie d'un silence de 32ms,
- maintenir un silence de 288ms,
- répéter trois fois: la note mi (256ms), suivie d'un silence de 32ms,
- maintenir un silence de 288ms,
- jouer la note mi (288ms), la note sol (288ms), la note do (durée 384ms), la note re (96ms) et la note mi (576ms),
- maintenir un silence de 576ms.

Le contenu de la table T3 à l'adresse de la mélodie M est donc le suivant:

TABLE T3

| Mélodie M → | N(mi) | D=256ms | |
|---|---|---|---|
| | S | D=32ms | |
| | R | NbR=2 | NbL=2 |
| | S | D=288ms | |
| | N(mi) | D=256ms | |
| | S | D=32ms | |
| | R | NbR=2 | NbL=2 |
| | S | D=288ms | |
| | N(mi) | D=256ms | |
| | N(sol) | D=288ms | |
| | N(do) | D=384ms | |
| | N(re) | D=96ms | |
| | N(mi) | D=576ms | |
| | S | D=576ms | |
| | R | NbR=∞ | NbL=14 |
| | F | | |

A titre d'exemple, la table T3 peut être codée en hexadécimales sur 4 digits. Le premier digit indique s'il s'agit d'un silence (0), d'une note (4 à D), d'une répétition (E) ou d'une fenêtre (1). Pour une note ou pour un silence, les trois digits suivants indiquent la durée de la note ou du silence. Pour une répétition, les deux digits suivants indiquent le nombre de répétitions et le dernier digit indique le nombre de lignes à répéter dans la table.

Un exemple de codage de la table T3 pour la mélodie M est donné ci-dessous:

<u>début</u>
```
        0x7100
        0x0020
        0xE022
        0x0120
        0x7100
        0x0020
        0xE022
        0x0120
        0x7120
        0xA120
        0x4180
        0x6060
        0x7240
```

0x0240
0xEFFE

fin

On comprend l'intérêt de la notion de fenêtre: dans l'exemple qui vient d'être décrit, le nombre de répétitions est soit infini (FF) soit limité à 254. Pour obtenir un nombre fini de répétitions supérieur à 254, on définit donc préalablement aux éléments concernés une fenêtre W d'une durée déterminée.

De même, le nombre de lignes que l'on peut répéter est limité à 15. Pour remédier à cet inconvénient on définit une notion de retour au début de la mélodie.

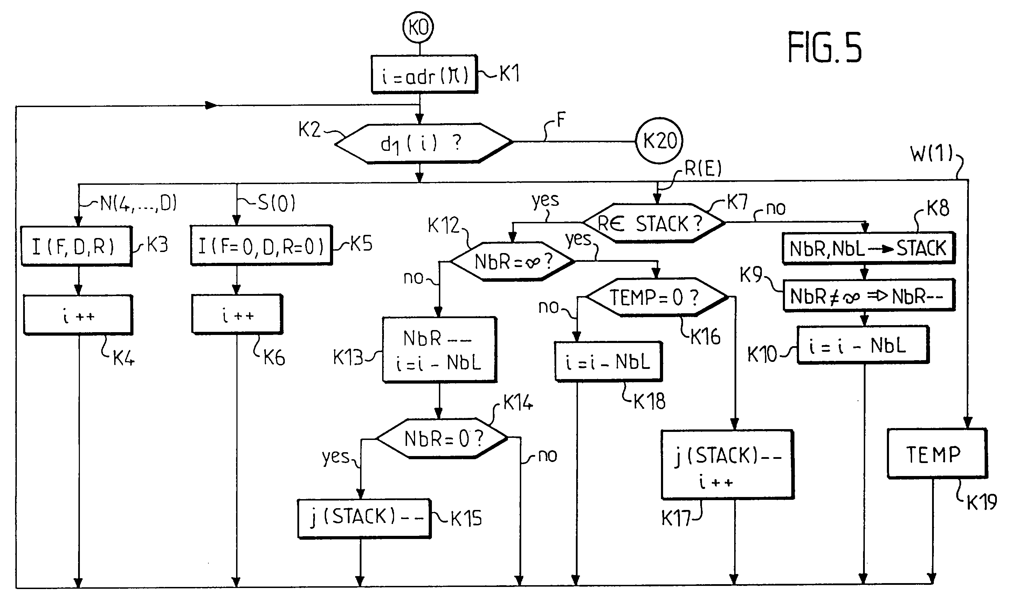

On va maintenant décrire à l'aide de la figure 5, un exemple d'organigramme de fonctionnement du processeur 8, relativement à l'invention.

Pour jouer la mélodie M avec un niveau sonore V, le processeur 8 lit séquentiellement la table T3. Pour cela, à la case K1, un indice i est initialisé à l'adresse adr(M) de la mélodie M dans la table T3. Puis à la case K2, un test est réalisé sur la valeur du premier digit de la ligne i de la table T3 (sur la figure 5, ce digit est noté d1). Si ce digit indique une note N à jouer le fonctionnement se poursuit à la case K3. S'il indique un silence S, il se poursuit à la case K5, s'il indique une répétition R, il se poursuit à la case K7, et s'il indique une fenêtre, il se poursuit à la case K19. Enfin, si ce champ indique que la mélodie est finie (F), le fonctionnement se termine à la case K20.

A la case K3, on initialise les variables indiquant les caractéristiques du signal d'excitation I à envoyer au transducteur 6 (fréquence F, durée D, rapport cyclique R). La fréquence F est lue dans la table T1 à partir de la référence de la note N à jouer. La durée pendant laquelle le signal doit être émis est lue dans la table T3 directement. Et la valeur de son rapport cyclique est lue dans la table T2 à partir du niveau sonore V recherché, et de la note N à jouer. Le signal d'excitation I(F, D, R) est émis vers le transducteur 6, puis à la case K4, l'indice i est incrémenté d'une unité, et le fonctionnement reprend à la case K2.

La case K5 traite du cas des silences. La durée D pendant laquelle le silence doit être respecté est donnée directement par la table T3. Un signal d'excitation I(F, D, R) de fréquence et de rapport cyclique nuls est émis vers le transducteur 6. Puis à la case K6 l'indice i est incrémenté d'une unité et le fonctionnement reprend à la case K2.

De la case K7 à la case K15, on traite le cas des répétitions. Pour cela, on utilise une pile (notée STACK) dans laquelle on stocke, les caractéristiques (Nombre de répétitions NbR et nombre de lignes à répéter NbL) de chaque nouvelle répétition rencontrée. A la case K7, on vérifie si cette répétition est une nouvelle répétition, ou s'il s'agit de la dernière répétition stockée dans la pile, c'est-à-dire de la répétition qui est en cours de traitement. S'il s'agit de la répétition qui est en cours de traitement, le fonctionnement se poursuit à la case K12. S'il s'agit d'une nouvelle répétition, et le fonctionnement se poursuit à la case K8.

A la case K8, les caractéristiques (NbR, NbL) de cette nouvelle répétition sont stockées dans la pile. Puis à la case K9, si la variable NbR a une valeur finie, elle est décrémentée d'une unité. A la case K10, on soustrait à l'indice i le nombre NbL puis le fonctionnement reprend à la case K2.

A la case K12, on vérifie si la variable NbR a une valeur finie. Dans ce cas le fonctionnement se poursuit à la case K13. Sinon il se poursuit à la case K16. A la case K13 la variable NbR est décrémentée d'une unité, et on soustrait à l'indice i le nombre NbL. Puis à la case K14 on teste si NbR est égale à zéro. Dans ce cas, on libère la ligne correspondante dans la pile (ce qui est symbolisé à la case K15 en décrémentant d'une unité l'indice courant j(STACK) de la pile STACK), avant de reprendre le fonctionnement à la case K2. Sinon, le fonctionnement reprend directement à la case K2.

A la case K16, on vérifie si l'on se trouve à l'intérieur d'une fenêtre dont la temporisation (TEMP) est échue. Dans ce cas (case K17), on libère la ligne correspondant à la répétition dans la pile, puis on incrémente l'indice i avant de reprendre le fonctionnement à la case K2. Dans le cas contraire (case K18), on soustrait à l'indice i le nombre NbL avant de reprendre le fonctionnement à la case K2.

A la case K19, une temporisation TEMP est lancée. L'indice i est incrémenté d'une unité puis le fonctionnement reprend à la case K2.

Il va de soi que des modifications peuvent être apportées au mode de réalisation qui vient d'être décrit à titre d'exemple, notamment par substitution de moyens techniques équivalents, sans que l'on sorte pour cela du cadre de la présente invention.

**Revendications**

1. Equipement téléphonique doté d'un transducteur électromécanique contrôlable qui délivre un niveau sonore variable en fonction de la fréquence, caractérisé en ce qu'il comporte des moyens d'adaptation de la réponse en fréquence dudit transducteur pour obtenir un niveau sonore constant quelque soit la fréquence considérée.

2. Equipement téléphonique selon la revendication 1, qui comporte des moyens pour fournir un signal d'excitation dudit transducteur, caractérisé en ce que lesdits moyens d'adaptation consistent notamment à faire varier le rapport cyclique dudit signal d'excitation.

3. Equipement téléphonique selon la revendication 2, caractérisé en ce qu'il comporte des moyens de mémorisation pour stocker pour chaque fréquence au moins une valeur du rapport cyclique dudit signal d'excitation pour obtenir au moins un niveau sonore donné en sortie du transducteur.

4. Equipement téléphonique selon l'une des revendications 1 à 3, caractérisé en ce qu'il comporte:

   - des moyens de codage d'une mélodie, consistant à stocker dans une table un ou plusieurs éléments constitutifs de ladite mélodie: notes, silences et éventuellement répétitions,
   - des moyens de lecture d'une mélodie codée, consistant à parcourir séquentiellement ladite table à partir du début de ladite mélodie, et éventuellement à effectuer des retours en arrière pour jouer lesdites répétitions.

5. Equipement téléphonique selon la revendication 4 ou 5, caractérisé en ce que ladite table contient pour chaque note et pour chaque silence une indication de la durée de ladite note ou dudit silence.

6. Equipement téléphonique selon l'une des revendications 4 ou 5, caractérisé en ce que ladite table contient pour chaque répétition:

   - un nombre de répétitions,
   - une indication relative aux éléments à répéter,
   - éventuellement une limite dans le temps lorsque ledit nombre de répétition est infini.

7. Procédé d'adaptation de la réponse en fréquence d'un transducteur électro-mécanique d'un équipement téléphonique, ledit transducteur électro-mécanique étant commandé par un signal d'excitation, caractérisé en ce qu'il consiste à faire varier le rapport cyclique dudit signal d'excitation.

8. Procédé de codage d'une mélodie dans un équipement téléphonique, caractérisé en ce qu'il consiste à stocker dans une table une succession d'une ou plusieurs note, silence et éventuellement répétition, ladite table étant destinée à être parcourue séquentiellement pour jouer ladite mélodie, avec d'éventuels retours en arrière pour effectuer lesdites répétitions.

9. Procédé de codage d'une mélodie selon la revendication 8, caractérisé en ce que ladite table contient:

   - une indication de durée pour chaque note et pour chaque silence,
   - pour chaque répétition, un nombre de répétition, une indication relative aux éléments à répéter, et éventuellement une limite dans le temps lorsque ledit nombre de répétition est infini.

FIG.1

FIG.2

FIG. 3

R = 8 %

R = 20 %

V (dB)

R (%)

EP 0 796 033 A1

32 ms

NbR = 3

256 ms

63 Hz

NbR = 3

288 ms          32 ms

256 ms
637 Hz

NbR = ∞

288 ms          576 ms

1632 ms

637 Hz ( 288 ms )
796 Hz ( 288 ms )
531 Hz ( 384 ms )
597 Hz ( 96 ms )
637 Hz ( 576 ms )

FIG.4

FIG.5

**Office européen des brevets**

# RAPPORT DE RECHERCHE EUROPEENNE

Numero de la demande

EP 97 20 0666

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 731 828 A (BASEHORE) 15 Mars 1988<br>* colonne 2, ligne 16-46 *<br>--- | 1-3,7 | H04R3/00<br>H04M1/72 |
| X | EP 0 094 162 A (NORTHERN TELECOM) 16 Novembre 1983<br>* page 1, ligne 2-5 *<br>* page 1, ligne 23 - page 3, ligne 2 *<br>* page 4, ligne 4 - page 18, ligne 16 *<br>--- | 1-3,7 | |
| X | PATENT ABSTRACTS OF JAPAN<br>vol. 15, no. 334 (E-1104), 26 Août 1991<br>& JP 03 127522 A  (TOSHIBA), 3 Mai 1991,<br>* abrégé *<br>& JP 03 127 522 A<br>--- | 1-3,7 | |
| Y | GB 2 091 470 A (CASIO) 28 Juillet 1982<br>* page 1, ligne 116-119 *<br>* page 3, ligne 61 - page 4, ligne 101 *<br>* page 6, ligne 27 - page 7, ligne 104 *<br>--- | 1-9 | |
| Y | US 4 598 179 A (CLARK ET AL.) 1 Juillet 1986<br>* colonne 2, ligne 50-58 *<br>* colonne 6, ligne 35 - colonne 7, ligne 31 *<br>--- | 1-9 | **DOMAINES TECHNIQUES RECHERCHES (Int.Cl.6)**<br><br>H04R<br>H04M<br>G10H<br>H04B |
| A | US 4 699 518 A (TANABE) 13 Octobre 1987<br><br>* colonne 1, ligne 6-12 *<br>* colonne 5, ligne 10 - colonne 15, ligne 51 *<br>----- | 1,4-6,8,9 | |

Le présent rapport a été établi pour toutes les revendications

| Lieu de la recherche | Date d'achèvement de la recherche | Examinateur |
|---|---|---|
| LA HAYE | 29 Avril 1997 | Zanti, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)